# EUROPEAN PATENT SPECIFICATION

(11) **EP 1 795 370 B1**
(45) Date of publication and mention of the grant of the patent: **25.03.2009**
(21) Application number: 05111902.2
(22) Date of filing: 09.12.2005
(51) Int. Cl.: B60B 5/02, B60B 21/06, B60B 1/00

(54) **Wheel having multiple tube frame structure.**
Rad mit Speichen- und Felgenstruktur aus mehreren Rohren
Roue avec structure de rayon et de jante en plusieurs tuyaux

(43) Date of publication of application: 13.06.2007
(73) Proprietor: Prince Sports, Inc., Bordentown NJ 08505 (US)
(72) Inventor: Davis, Stephen J., Newton PA 18940 (US); Gazzara, Roberto, 30171 Mestre (VE) (IT)
(74) Representative: Zanoli, Enrico

(56) References cited:
- EP-A- 1 506 882
- FR-A- 2 707 559
- US-A- 5 249 846
- US-A- 5 975 645
- US-A- 6 086 161

## Description

The present invention is a composite wheel, and preferably a composite bicycle wheel made using a multitude of tubes fused together along their facing surfaces to provide an internal reinforcing wall as well as apertures, or "ports," between the tubes to provide specific performance advantages.

This invention relates to an improved structure for a composite bicycle wheel including the rim and spokes. In particular, the basis of the design is to take advantage of a structure using more than one reinforcing tube, which creates an internal reinforcing wall to improve strength and stability. In addition, these tubes can be separated in strategic locations and orientations to form apertures or ports between the tubes which act as double opposing arches which provide additional strength, stiffness and aerodynamic benefits.

The weight of a performance bicycle is a critical feature in determining performance. The lighter the weight, the quicker the bike will accelerate, the easier to sustain high speeds, the easier to climb uphill grades as well as being easier to maneuver. Therefore, the lightest materials and designs are used to achieve these performance goals.

The most popular material for modern high performance bicycle design is carbon fiber reinforced epoxy resin (CFE) because it has the highest strength-to-weight ratio of any realistically affordable material. As a result, CFE can produce a very light weight bicycle wheel with excellent rigidity as well as provide an aesthetically pleasing shape. Molded structures out of CFE can exhibit smooth and sleek shapes thereby reducing their aerodynamic drag allowing them to pass through the air more efficiently.

A major factor in determining the efficiency of a bicycle is the wheel. The wheel presents a large frontal area and therefore is major contributor to aerodynamic drag. The wheel is constantly rotating, which adds a unique aerodynamic effect. In addition, the spokes can add significantly to the aerodynamic drag. Furthermore, since there are two wheels, they can also contribute significantly to the overall weight of the bicycle.

Another important factor for bicycle wheels is stiffness. The wheel is subjected to radial loads transmitted by the spokes. The wheel must be stiff enough to resist these loads without being too stiff to create an uncomfortable ride. In certain cases it is preferable to have a stiff wheel, for example with road bikes. In other cases, it is preferable to have a flexible wheel, for example with mountain bikes. It is very difficult to deliver both in a single technology or design.

There are also side loads or transverse loads on the bicycle wheel. These can result from the bicyclist taking a corner at high speeds, or by inducing high loads on the pedals while counteracting this torque with the handlebars. The stiffer the wheel is in resisting these side loads, the more responsive the bicycle will be and will react faster allowing for greater acceleration and improved handling.

Another important factor for bicycle wheels is strength. There are a number of loads induced on the bicycle wheel. There are centrifugal forces resulting from high velocity turns. There are impact forces from hitting large objects such as pot holes in the road or rocks off road. There are vibrations resulting from "road buzz" by riding on a rough road. Therefore the wheel must withstand a multitude of load conditions.

Finally, the wheel of a bicycle is one of the most visible components, and can make a statement about the quality and expected performance of the bike. Having a high tech looking wheel can greatly add to the perceived value of a bicycle, which is very important when the price of carbon bicycle frames can be in the thousands of dollars.

The evolution of the modern bicycle wheel over the past thirty years has focused mainly on light weight and aerodynamics. For this reason, there have been numerous designs incorporating carbon fiber composites. These designs can be categorized into one of two types: 1) composite rims using traditional spokes, and 2) composite rims and composite spokes combined.

Initial designs attempted to create a one piece composite wheel molding the rim portion and spoke portions together. U.S. Pat. No. 4,930,843 to Lewis discloses a composite wheel with a hollow composite rim and hollow composite spokes. Lewis describes a weight reduction compared to traditional metal wheels as well as an aerodynamic advantage due to the airfoil shaped spokes. Although this produces a very light weight design, having hollow spokes constructed of single composite tubes makes the wheel susceptible to compression buckling due to the thin walls of the tubes.

U.S. Pat. No. 4,995,675 to Tsai describes a composite wheel with composite spokes which have a foam core, and a composite rim which is hollow. A foam core in the spokes can increase the resistance to buckling load. However, the hardness and therefore weight of the foam core would have to be substantial to resist this load.

Yet another design for a spoked composite wheel is described in U.S. Pat. No. 5,246,275 to Arrendondo which describes a hollow composite unitary structure to achieve weight and stiffness efficiencies. This design utilizes hollow single tube spokes with a large cross sectional width dimension which makes them susceptible to buckling failure because of the thin sidewalls.

There have been several designs using composites to produce only the rim portion. U.S. Pat. No. 5,061,013 to Hed and Haug describes an alternative design to a solid disc type wheel where the rim of the wheel is of a greater radial dimension and attaches to conventional spokes. This design offers the advantages of low aerodynamic drag as with the solid wheel disc, but is not susceptible to cross wind loads. The '013 design states a preference for composite materials to achieve low weight and uses a single tube design. In order to attach the spokes, holes must be drilled at the inner rim surface in a radial direction. In addition, a larger hole must be drilled at the outer rim surface in a corresponding location in order to accommodate a tool to adjust the spokes. This creates a large stress concentration having the two drilled holes in close proximity to each other.

Another composite wheel rim design is described in U.S. Pat. No. 5,249,846 to Martin, et. al., which describes a composite wheel rim comprised of at least two adjacent box-like structures, each with a foam core, and with a common wall in between. The purpose of the design is to produce a light weight and strong wheel rim. The design requires that holes are drilled to attach the spokes, and that the spokes attach to the thicker, stronger wall of the rim box because the fairing portion is too weak to support such loads.

Yet another composite wheel rim design is described in U.S. Pat. No. 5,975,645 to Sargent, which describes a wheel rim with a tire engaging rim portion, and another body portion inward of this with bulbous shaped side walls designed to flex to absorb vibrations and impact loads. The spokes connect to the innermost portion of the rim, and it is the flexibility of the side walls that provide shock absorption, as they will flex when the spoke exerts more tensile loads. For this reason, this design can feel unresponsive due to these deflections. In addition, holes must be drilled in the inner portion of the rim to attach the spokes as well as the outer portion in order to access and adjust the spokes.

Using composite materials for wheels provides the advantages of light weight and aerodynamics. To date wheel designs can be categorized into two basic types: composite rims which use traditional thin profile spokes, and composite wheels where the spokes are fewer in number and larger in cross section and integrated into the composite wheel structure.

Composite materials are an attractive option to metal when designing wheel rims, which must be light, stiff, strong, resilient, and aerodynamic. A rim as recited in this document is a portion of a wheel near the exterior perimeter which requires an attachment means to the hub. The most common means to do this is with traditional metal spokes. There are other spoke materials including high strength aluminum and light weight fibers such as PBO (Polyphenylene benzobisoxazole).

As with all spokes, there must be a means to attach the spokes between the rim and the hub. To attach to a traditional rim portion, the rim must be drilled in two locations to accomplish this. First, the inner most surface of the rim in the radial direction is drilled to accommodate the shaft of the spoke. Second, a larger hole is drilled at the rim outer surface along the same radial direction, typically where the tire rests, to provide external access to the nut which retains the spoke. This is necessary for adjusting the tension of the spoke.

The drilling of holes can weaken a structure significantly. In the case of composite materials, every time a hole is drilled, reinforcement fibers are severed. For example, for a typical high performance bicycle wheel, there are 32 spokes which means there will be 32 small holes and 32 large holes drilled in the rim structure. In addition, these holes are drilled at the locations at the inner and outer surfaces. This significantly weakens the structure and makes it more susceptible to failure.

There exists a continuing need for an improved wheel design. In this regard, the present invention substantially fulfills this need.

The present invention according to claim 1 is for a wheel structure that is constructed using multiple tubes of composite prepreg materials that are molded into the various portions of the bicycle wheel such as the rim and spoke portions, wherein adjacent tubes are bonded together, i.e., fused, during molding along a common internal wall. Forming the rim and/or spokes with such a multiple tube design provides tailored stiffness, added strength, greater shock absorption, greater fatigue resistance, greater comfort, improved aerodynamics, improved spoke attachment means and improved aesthetics over the current prior art.

In view of the foregoing commonality inherent in the known types of bicycle composite wheels of known designs and configurations now present in the prior art, the present invention provides an improved wheel system.

There has thus been outlined, rather broadly, the more important features of the invention in order that the detailed description thereof that follows may be better understood and in order that the present contribution to the art may be better appreciated. There are, of course, additional features of the invention that will be described hereinafter and which will form the subject matter of the claims attached.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of descriptions and should not be regarded as limiting.

As such, those skilled in the art will appreciate that the conception, upon which this disclosure is based, may readily be utilized as a basis for the designing of other structures, methods and systems for carrying out the several purposes of the present invention. It is important, therefore, that the claims be regarded as including such equivalent constructions insofar as they do not depart from the scope of the present invention.

The manufacturing process according to claim 28 to produce each of the wheel components is very similar and will be covered in more detail later. The basic process is to use prepreg materials such as carbon fiber/epoxy which are rolled up into tubes. The tubes are formed with plies of unidirectional fibers, in which the plies are oriented at predetermined angles based upon the characteristics desired. A polymeric bladder is inserted inside the tube, and the assembly is packed into a mold. The mold is heated in a platen press and air pressure is applied to inflate the tubes in order to create internal pressure and expand and fill the cavity of the mold while consolidating the laminate plies.

The present invention provides a new and improved wheel system which may be easily and efficiently manufactured.

The present invention provides a new and improved wheel system which is of durable and reliable construction.

The present invention provides a new and improved wheel system which is susceptible of a low cost of manufacture with regard to both materials and labor.

The present invention provides a wheel system that can provide specific stiffness and resiliency combinations to various portions of the wheel.

The present invention provides an improved wheel system that has superior strength and fatigue resistance.

The present invention provides an improved wheel system that has improved aerodynamics.

The present invention provides an improved wheel system that has improved vibration damping characteristics.

The present invention provides an improved wheel system that has improved shock absorption characteristics.

The present invention provides an improved wheel system that eliminates drilled holes for the spoke attachment.

The present invention provides an improved wheel system that has a unique look and improved aesthetics.

Lastly, the present invention provides a new and improved wheel system made with a multiple tube design, where the tubes, which are fused together along much of their lengths, are separated from one another at selected locations to form apertures that act as double opposing arches, providing improved means of adjusting stiffness and resiliency and improving strength, aerodynamics, and spoke attachment. The present invention applies to the rim and spoke leg portions.

For a better understanding of the invention, its operating advantages and the specific objects attained by its uses, reference should be made to the accompanying drawings and descriptive matter in which there are illustrated preferred embodiments of the invention:
Figure 1 is a side elevational view of a shallow profile wheel rim constructed in accordance with an embodiment of the present invention.
Figures 1A - 1B are cross sectional views of the wheel rim shown in Figure 1, taken along lines 1A-1A and 1B-1B, respectively.
Figure 1C is a view similar to Fig. 1B of an alternate embodiment.
Figure 2 is a side elevational view of a deep profile wheel rim constructed in accordance with an embodiment of the present invention.
Figures 2A - 2B are cross sectional views of a two tube construction of the wheel rim taken through lines 2A-2A and 2B-2B, respectively, of Figure 2.
Figures 2C - 2D are cross sectional views, similar to Figs. 2A and 2b, of an alternate two tube construction.
Figures 2E - 2F are cross sectional views, similar to Figs. 2A-2b, respectively, of a three tube construction of a wheel rim.
Figures 2G - 2H are cross sectional views, similar to Figs. 2A-2b, respectively, of a four tube construction of a wheel rim.
Figure 3 is a side elevational view of a deep profile wheel rim of an alternative embodiment of the present invention.
Figures 3A - 3B are cross sectional views of a three tube construction of the wheel rim shown in Figure 3, taken through lines 3A-3A and 3B-3B, respectively.
Figures 3C - 3D are cross sectional views, similar to Figs. 3A and 3B, respectively, of a two tube construction of a wheel rim.
Figure 4 is a side elevational view of deep profile wheel rim of another alternative embodiment of the present invention.
Figure 4A is a cross sectional view, taken through lines 4A-4A of Fig. 4, of a three tube construction of a wheel rim.
Figures 4B - 4C are cross sectional views, taken through lines 4B-4B and 4C-4C, respectively, of an alternative three tube construction of the wheel rim.
Figure 4D is a sectional view, similar to Fig. 4C, of an alternate embodiment of rim.
Figure 4E is an elevational side view of another alternative embodiment of the present invention.
Figures 4F is a cross sectional view of the wheel system shown in Figure 4E, taken in the direction of lines 4F-4F
Figure 4G is a cross sectional view of the hub of Figure 4E, taken in the direction of lines 4G-4G.
Figure 5 is a side elevational view of a spoked wheel design embodiment of the invention.
Figure 5A is a side elevational view of the preferred tube layout for forming the wheel shown in Figure 5.
Figures 5B - 5E are cross sectional views of the wheel shown in Figure 5, taken through lines 5B-5B through 5E-5E, respectively.
Figure 5F is a side elevational view showing alternative spoke leg designs.
Figure 5G is another side elevational view showing alternative spoke leg designs.
Figure 5H is a side elevational view showing an alternative four spoke leg design.
Figure 5l is a side elevational view showing the prepreg tube positioning to construct the wheel shown in Figure 5H.

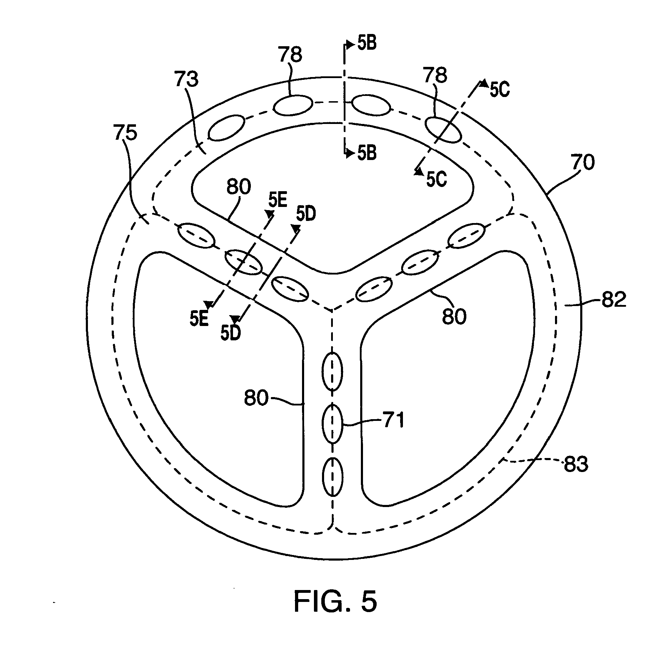

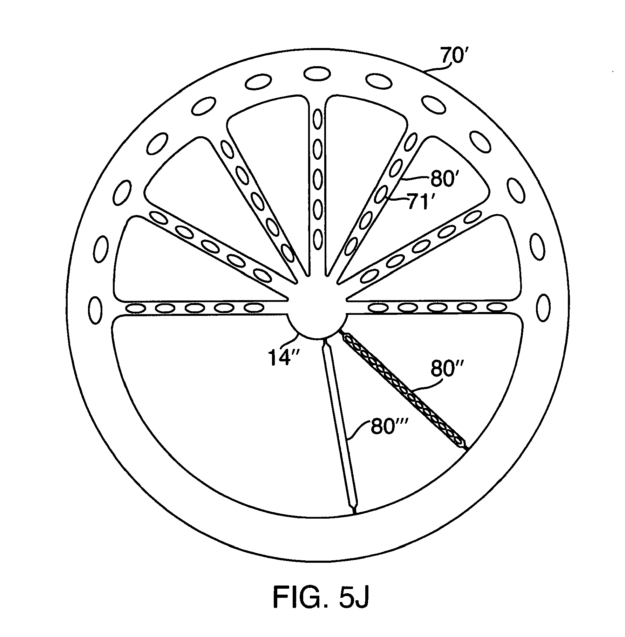

Figure 5J is a side elevational view showing alternative spoke leg designs.

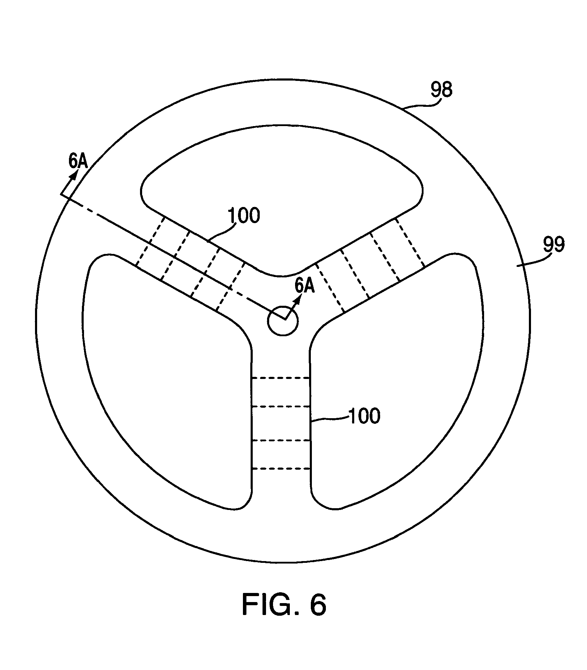

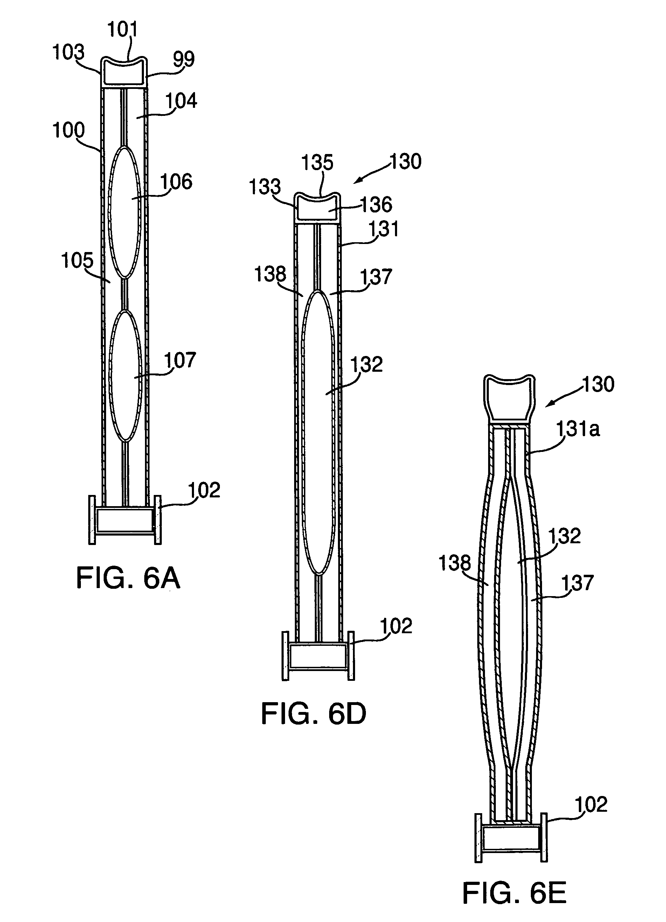

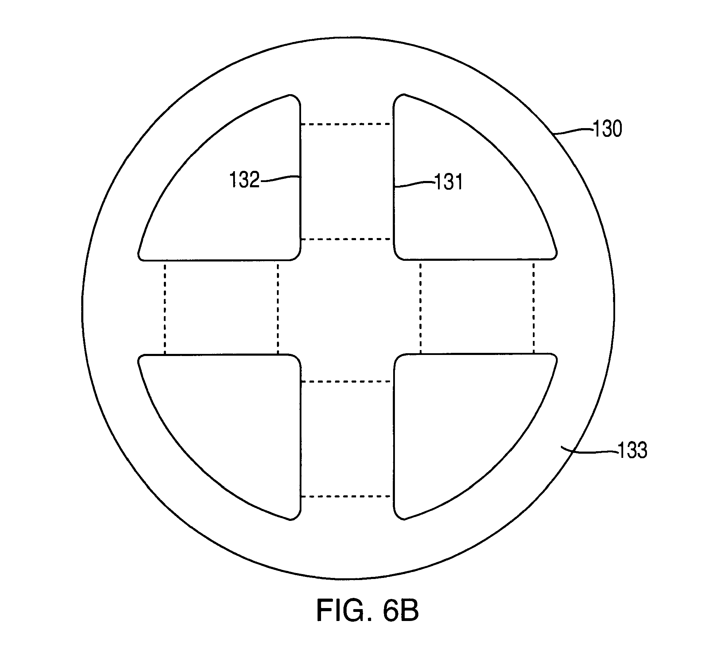

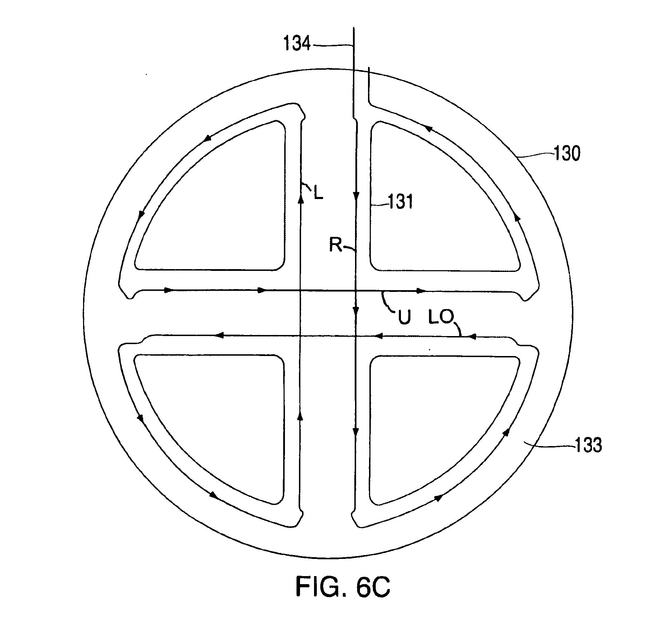

Figure 6 is a side elevational view of an alternative spoked wheel design.
Figure 6A illustrates a cross sectional view of the wheel as shown in Figure 6, taken through lines 6A-6A.
Figure 6B is a side elevational view of another alternative spoked wheel design.
Figure 6C is a side elevational view showing the prepreg tube positioning to construct the wheel shown in Figure 6B.
Figures 6D and 6E are cross sectional views showing alternative constructions of the wheel shown in Figure 6B.

The present invention is designed to provide tailored stiffness, greater impact strength, greater shock absorption, greater fatigue resistance, greater aerodynamic effects, less vibrations, greater comfort, and improved aesthetics over the current prior art.

The wheel system according to the present invention substantially departs from the conventional concepts and designs of the prior art and in doing so provides an apparatus primarily developed for the purpose of maintaining light weight while improving stiffness, strength, shock absorption, aerodynamics as well as improved appearance. This combination of benefits has never been achieved before in wheel design.

The present invention uses multiple tubes which can be positioned and separated in local areas to form apertures at various locations to create unique performance advantages as well as a unique aesthetic appearance.

Designing a wheel using multiple tubes has numerous advantages. First of all, a common wall is formed between the tubes to create an internal structure to stiffen and strengthen the wheel portion, for example, the rim or the molded spoke legs. As a result, a thinner profile structure can be designed. In addition, a structure with thinner walls can be used because the internal wall resists the buckling failure mode which is common for composite materials.

Compared to a rim type design which uses traditional spokes, the multiple tube design can eliminate drilled holes in the rim. For example, the rim portion can designed with two tubes which separate in local areas to form apertures, or "ports," designed to support the spoke attachment. This will create an even stronger structure compared to traditional rim designs.

This provides the option of changing the shape of the rim, for example, a thinner profile rim which is lighter in weight.

The multiple tube design can create ports in a variety of positions and orientations to produce unique performance advantages. For example, ports positioned on the rim and/or spoke legs with axes parallel to the axis of the wheel can produce a structure with a more flexible radial stiffness to absorb shock and provide greater rider comfort.

Another option is to create ports in the rim with axes parallel to the axis of the wheel to provide support means for traditional spoke attachment. This can be done using a variety of designs which will be discussed in greater detail later.

There is also an aerodynamic advantage with a wheel having ports in the rim and/or spoke legs with axes oriented parallel to the wheel axis. The ports allow cross winds to pass through the wheel easier and not affect the stability of the bicycle. This allows the use of a deeper rim design and/or wider spoke legs, to further reduce the aerodynamic drag of the wheel. Another aerodynamic design option is to orient the ports in the spoke legs so they are in line with the tangential direction of wheel rotation to reduce aerodynamic drag.

If more vibration damping is desired, the ports can be oriented and shaped at a particular angle, and constructed using fibers such as aramid or Liquid Crystal Polymer. As the port deforms as a result of rim or spoke leg deflection, its return to shape can be controlled with these viscoelastic materials which will increase vibration damping. Another way to increase vibration damping is to insert an elastomeric material inside the port.

The process of molding with composite materials facilitates the use of multiple tubes in a structure, although it is possible to manufacture with metal tubes. The most common method of producing a composite tube is to start with a raw material in sheet form known as "prepreg" which are reinforcing fibers impregnated with a thermoset resin such as epoxy.

The resin is in a "B Stage" liquid form which can be readily cured with the application of heat and pressure.

The fibers can be woven like a fabric, or unidirectional, and are of the variety of high performance reinforcement fibers such as carbon, aramid, glass, etc. The prepreg material commonly comes in a continuous roll or can be drum wound which produces shorter sheet length segments. The prepreg is cut at various angles to achieve the correct fiber orientation, and these strips are typically overlapped and positioned in a "lay-up" which allows them to be rolled up into a tube. A polymer bladder is inserted into the middle of the prepreg tube and is used to generate internal pressure to consolidate the plies upon the application of heat. The premold assembly consisting of the prepreg tube and polymer bladder is positioned into a mold cavity and an air fitting is attached to the bladder. The mold is pressed closed in a heated platen press and air pressure is applied inside the bladder. As the temperature rises in the mold, the viscosity of the epoxy resin decreases as the bladder expands forcing excess resin to flow outwardly which results in a consolidated part.

To produce a tubular part with multiple prepreg tubes requires slightly more labor as well as an air pressure fitting for each tube. For example, when molding the same tubular part using two prepreg tubes, each tube should be approximately half the size of the single tube, and each tube should have its own internal bladder, air fitting and air pressure supply line. The process for packing the mold is very similar except two tubes are packed into the mold and two air fittings attached. Care should be taken for the position of each tube so that the internal wall formed between the tubes is oriented properly. The air pressure for each tube should be applied simultaneously to retain the size and position of each tube and the formed wall in between. As the mold is heated and the epoxy flows and the tubes expand, they will press against each other forming an internal wall that will be well consolidated.

Another important consideration is the location of the air insertion means. Each of the tubes requires internal air pressure in order to expand and consolidate the plies. This can be done using several different strategies.

When molding a rim portion, the air insertion area will result in a hole in the wall of the rim.

This hole can also serve as the hole for the valve stem of the pneumatic tire. If multiple tubes are used to form the rim, then each of the insertion holes will need to be equally spaced around the perimeter of the rim in order to balance the weight distribution.

When molding a separate spoke leg portion, the air insertion will preferably be on each end of the spoke leg. The spoke leg will be molded as a single structure, and each end where the air insertion is located will be trimmed so to leave an open end into which will be bonded a fitting to attach to either the hub or the rim.

When molding a spoke leg portion that is integrated with the rim portion, the tube forming part of the rim shall also form part of the spoke leg, and the air insertion location will preferably be located on the rim wall as mentioned above.

The internal wall of the molded tubular part adds significantly to improving the structural properties of the tubular part. During bending or twisting deflections, the shape of the tubular part is better maintained, eliminating the deformation of the cross section. To gain a perspective how thin walls can be with light weight composite bicycle wheels, it is often common to be able to deform the wall of some light weight composite bike wheels by simply squeezing the wheel wall with the hand. With the internal wall, the integrity of the tubular part is maintained because as the tube is subjected to bending and twisting, minimal deformation will occur, resulting in a stiffer and stronger structure.

For this reason, a foam core is not needed for structures molded with multiple tubes.

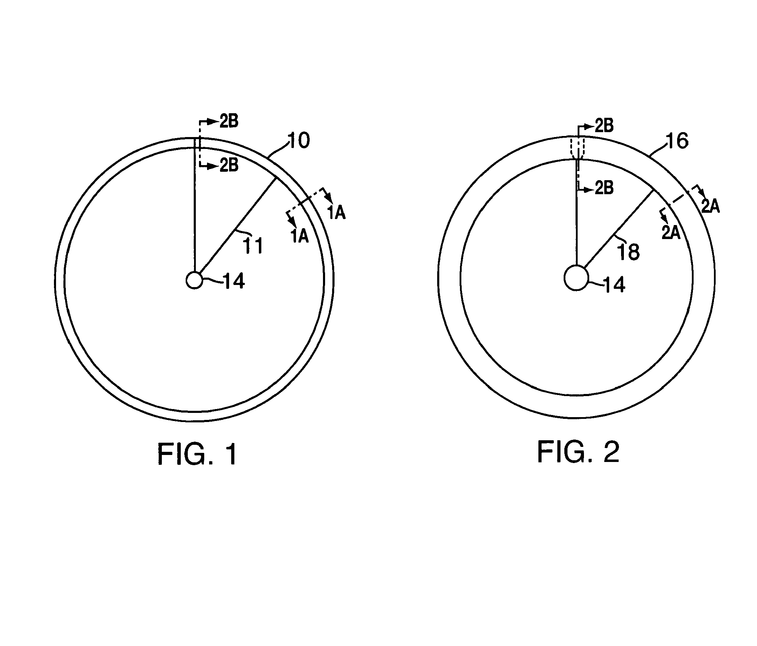

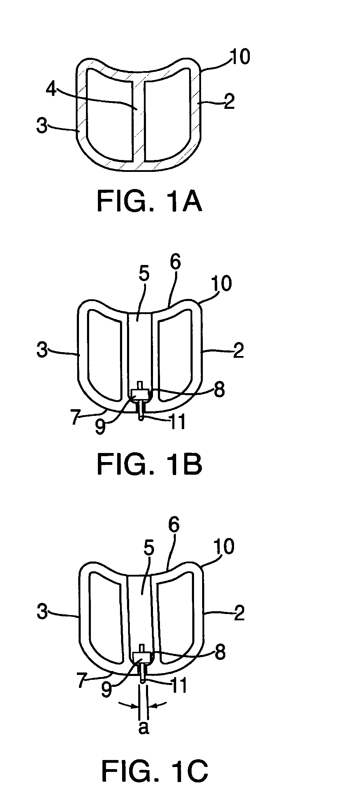

In a first example using a shallow depth rim, Figure 1 shows a side view of a composite rim 10 with spokes 11 attached to the rim 10 and connecting to the hub 14. Figure 1A shows a cross section of the wheel rim 10 taken along lines 1A-1A of Figure 1. Here, two tubes 2 and 3 are positioned side by side and used to mold the rim 10. A common wall 4 is formed between the tubes oriented in the plane of the wheel, offering maximum in-plane stiffness to resist the tension of the spokes.

Figure 1B show a cross section of rim 10 in the area of spoke attachment taken along the lines 2B-2B. Here the two tubes 2 and 3 are separated to form an aperture 5 which has a larger diameter near the rim outer surface 6 and a smaller diameter at the rim inner surface 7. Where the two diameters change inside the aperture is a shoulder 8 which supports the spoke nut 9. With this design, no fibers are severed since the aperture 5 is molded into the rim structure 10.

The nut 9 is free to rotate on surface 8 to facilitate tension adjustment of spoke 11.

Figure 1C shows an alternative design where aperture 5 is molded at an angle "a" to provide a direct line direction of spoke 11 to the hub 14. This more uniformly distributes the pressure of nut 9 on the shoulder 8 as well as facilitating external access to the spoke nut 9. Since the spokes are typically attached to the hub alternately on opposite sides, the spoke aperture on either side of the aperture 5 shown in Figure 1C would be angled in the opposite direction.

However, the spoke can come off at any angle, including straight down, and the molded or drilled hole will accommodate that.

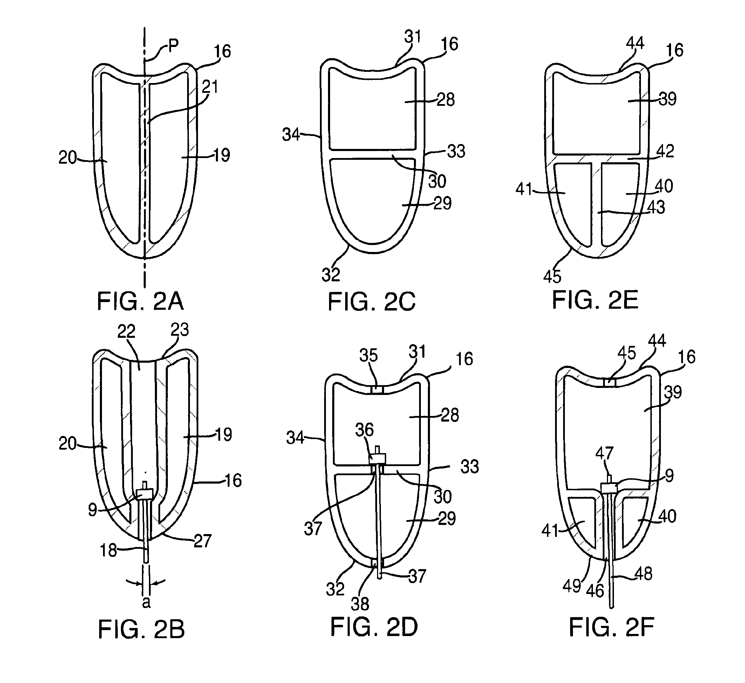

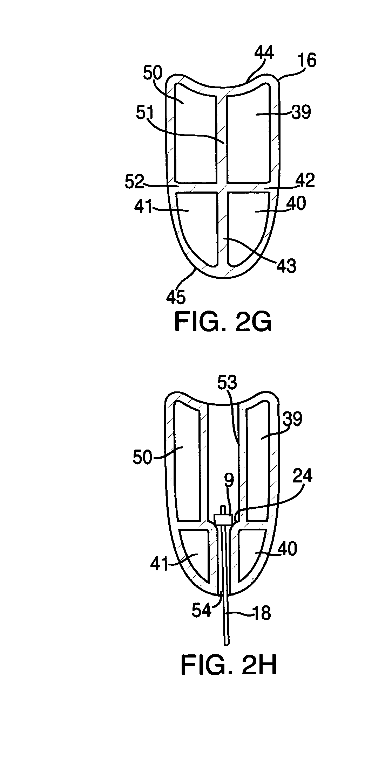

Another example of a rim design is for a deep rim design as shown in Figure 2. Rim 16 has a radial dimension much greater than the shallow rim 10 in order to provide less aerodynamic drag. For this reason, spokes 18 are of a shorter length by a corresponding distance than spokes 12.

Figure 2A is a cross section of rim 16, taken along the lines 2A-2A of Figure 2, and illustrates the side by side position of the two tubes 19 and 20 in a similar manner as rim 10. A common wall 21 is formed between the tubes.

Figure 2B shows a cross section of rim 16 taken along the lines 2B-2B of Figure 2, in the area of spoke attachment. Here the two tubes 19 and 20 are separated to form an aperture 22 which has a larger diameter near the rim outer surface 23 and a smaller diameter at the rim inner surface 27. Where the two diameters change inside the aperture is a shoulder 24 which supports the spoke nut 9. As with the previous example, no fibers are severed since the aperture 22 is molded into the rim structure 16. The nut 9 is free to rotate on surface 24 to facilitate tension adjustment of spoke 18.

As in the case of Figure 1C, aperture 22 may be molded at an angle "a" to provide a direct line direction of spoke 18 to the hub 14. This more uniformly distributes the pressure of nut 9 on the shoulder 24 as well as facilitating external access to the spoke nut 9.

In Figures 2A-2B, the common interior wall between tubes lies in the center plane "P" of the rim. Figure 2C-2D show an alternative design of rim 16 in Figure 2 using two tubes positioned inward and outward of each other. Tube 28 is positioned near the outer surface 31 and tube 29 positioned toward the inner surface 32. As a result, in this embodiment, the interior common wall 30 is oriented perpendicular to the center plane of the rim. This design positions and orients the common wall 30 to support the long sides 33 and 34 which are more susceptible to deflections.

Figure 2D illustrates the alternative design described in Figure 2D in the region of the spoke attachment. Here it is necessary to drill the apertures 35 at the outer surface 31, the aperture 37 at the common wall 30, and the aperture 38 at the inner surface 32.

Figures 2E - 2F illustrate another alternative design of rim 16 of Figure 2. Figure 2E shows a cross section of rim 16 in an area away from the spoke attachment at the locations 2A-2A of Figure 2. This alternative design uses 3 tubes, with a larger tube 39 positioned near the outer surface 44. Two smaller tubes 40 and 41 are positioned side by side near the inner surface 45.

A common wall 42 is formed between the larger tube 39 and the two smaller tubes 40 and 41.

A common wall 43 is formed between the smaller tubes 40 and 41.

Figure 2F is a cross section of the design described in Figure 2E in the spoke attachment area in the location 2B-2B of Figure 2. In this design, the two smaller tubes 40 and 41 are separated to form an aperture 46 near the inner surface 49 of the rim. The larger tube 39 is drilled to form the aperture 45 near the outer surface 44, which communicates with the aperture 46.

Figures 2G and 2H illustrate another alternative design of rim 16 of Figure 2. Figure 2G shows a cross section of rim 16 at the location 2A-2A of Figure 2. This alternative design uses 4 tubes, with two tubes 39 and 50 positioned side by side near the outer surface 44, and two smaller tubes 40 and 41 positioned side by side near the inner surface 45. A common wall 51 is formed between the two outer tubes 39 and 50. A common wall 42 is formed between the outer tube 39 and the inner tube 40. A common wall 51 is formed between the outer tube 50 and the inner tube 41. A common wall 43 is formed between the two inner tubes 40 and 41.

Figure 2H illustrates a cross section of the design described in Figure 2H in the spoke attachment area at location 2B-2B of Figure 2, with the spoke 18 and nut 9 omitted for clarity.

In this design, the two smaller tubes 40 and 41 are separated to form an aperture 54 near the inner surface 45. The two larger tubes 39 and 50 are separated to form an aperture 53 near the outer surface 44. The aperture 53 is larger in diameter than aperture 54, creating a shoulder 24 to support the nut 9 of spoke 18.

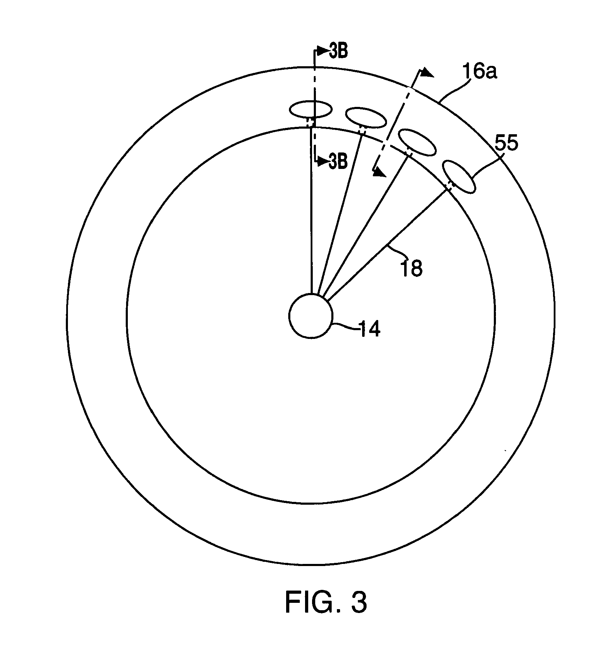

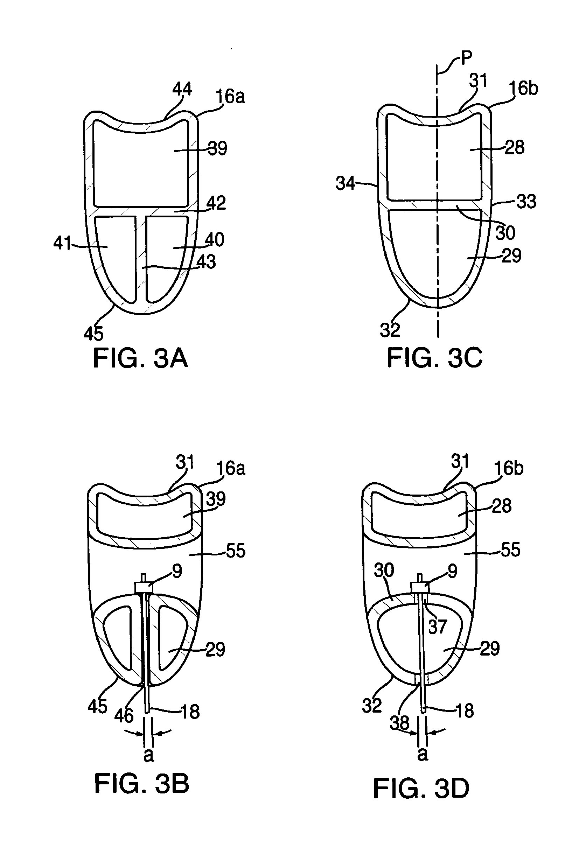

Another example of a rim design is for a deep rim design as shown in Figure 3. In this rim 16a, apertures 55 are formed with axes perpendicular to the center plane of the rim 16, allowing cross winds to pass through the wheel. In this particular design, apertures 55 are spaced such that each provides means to support the spokes 18.

Figures 3A - 3C are cross sectional views of the rim 16 as shown in Figure 3. Figure 3A is a cross section of rim 16 taken along the lines 3A-3A of Figure 3. This alternative design uses 3 tubes, with a larger tube 39 positioned near the outer surface 44. Two smaller tubes 40 and 41 are positioned side by side near the inner surface 45. A common wall 42 is formed between the larger tube 39 and the two smaller tubes 40 and 41. A common wall 43 is formed between the smaller tubes 40 and 41.

Figure 3B is a cross sectional view of rim 16a taken along the lines 3B-3B of Figure 3. The radially outer tube 39 is separated from the two inner tubes 40 and 41 to form aperture 55.

Tubes 40 and 41 are separated to form aperture 46 which is oriented in a radial direction near the inside surface 45. Aperture 46 is sized of sufficient size to accommodate the spoke 18 but small enough to form a seat and bearing surface for the spoke nut 9. Aperture 55 is large enough to provide external access to the spoke 18 and spoke nut 9. An option would be to design the spoke to have a decorative attachment means in this location and change the tension adjustment means to the area near the hub of the wheel.

As in the case of Figure 1C, the aperture 46 may be molded at an angle "a" to provide a direct line direction of spoke 18 to the hub 14. This more uniformly distributes the pressure of nut 9 on the shoulder 24 as well as facilitating access to the spoke nut 9.

Figures 3C-3D show an alternative design of a rim 16b using two tubes positioned inward and outward of each other. Figure 3C is a cross section of rim 16b at the location 3A-3A of Figure 3. Tube 28 is positioned near the outer surface 31 and tube 29 positioned toward the inner surface 32. This design positions and orients the common wall 30 perpendicular to the center plane of the rim to support the long sides 33 and 34 which are more susceptible to deflections.

Figure 3D is a cross section of the rim 16b at the location 3B-3B of Figure 3 in the spoke attachment area. Tube 28 is separated from tube 29 to form aperture 55. Tube 29 is drilled to form apertures 37 and 38 whose centerline is oriented in a radial direction. Apertures 37 and 38 are designed of sufficient size to accommodate the spoke 18 and also to support the spoke nut 9. Aperture 55 is large enough to provide access to the spoke 18 and spoke nut 9. An option would be to design the spoke to have a decorative attachment means in this location and change the tension adjustment means to the area near the hub of the wheel. Even though drilling is necessary in this example, the apertures are formed though tube 29, which is a minor structure compared to tube 28 as well as the common wall 30.

As in Figure 1C, apertures 37 and 38 may be oriented at an angle "a" to provide a direct line direction of spoke 18 to the hub 14. This more uniformly distributes the pressure of nut 9 on the shoulder 30 as well as facilitating access to the spoke nut 9.

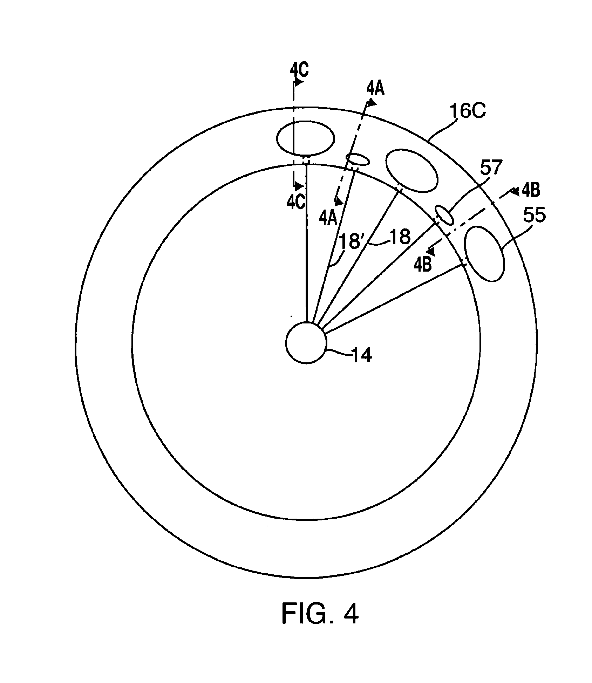

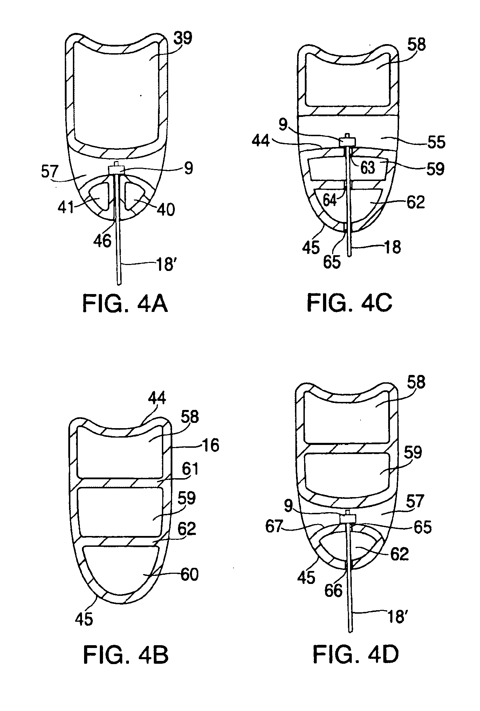

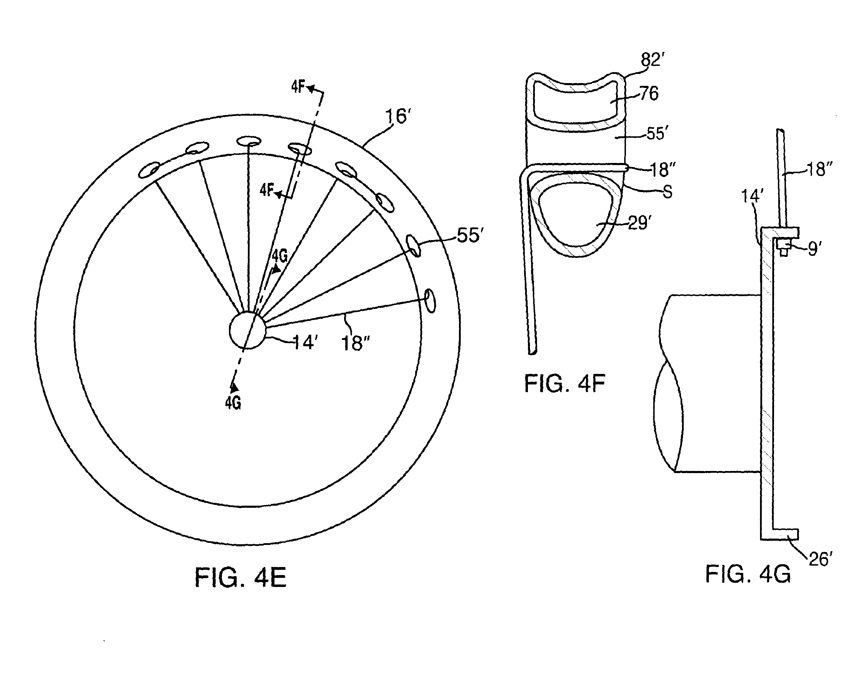

Another example of a deep rim design with apertures is shown in Figure 4. As in Figure 3, apertures 55 are formed in the rim 16c with their axes perpendicular to the center plane of the rim 16c, allowing cross winds to pass through the wheel. In this particular design, apertures 55 are large enough so that there are insufficient quantities to provide attachment means for the spokes 18. Other smaller apertures 57 are provided for the other spokes 18'.

As in the case of Figure 3, this alternative design uses three tubes. The cross-sections at locations 4B-4B (between apertures 55) and 4C-4C (through the apertures) are the same as shown in Figures 3A and 3B, respectively. Referring to Figures 3A and 3B, a larger tube 39 is positioned near the outer surface 44, and two smaller tubes 40 and 41 are positioned side by side near the inner surface 45. In locations other than the holes 55 and 57, a common wall 42 is formed between the larger tube 39 and the two smaller tubes 40 and 41, and a common wall 43 is formed between the smaller tubes 40 and 41 (see Figure 3A)..

As in the case of Figure 3B, aperture 55 is large enough to provide access to the spoke 18 and spoke nut 9. An option would be to design the spoke to have a decorative attachment means in this location and change the tension adjustment means to the area near the hub of the wheel.

Figure 4A is a cross sectional view of rim 16 taken along the lines 4A-4A of Figure 4. In this case, aperture 57 is much smaller than apertures 55 and is used primarily to attach the spoke 18'. Tube 39 is separated from the joined tubes 40 and 41 to form aperture 55. Tubes 40 and 41 are separated to form aperture 46 which is oriented in a radial direction near the inside surface 45. Aperture 46 is sized of sufficient size to accommodate the spoke 18' and also to support the spoke nut 9. Aperture 57 is large enough to provide access to the spoke 18' and spoke nut 9. An option would be to design the spoke to have a decorative attachment means in this location and change the tension adjustment means to the area near the hub of the wheel.

Figures 4B-4C are cross sectional views of an alternative design of the rim 16 as shown in Figure 4. Figure 4B shows a cross section taken along the lines 4B-4B of Figure 4. In this example, 3 tubes are positioned in a radial manner. Tube 58 is the outermost tube, tube 60 is the innermost tube, and tube 59 is positioned in between.

Figure 4C shows a cross section taken along the lines 4C-4C of Figure 4 in the area of spoke attachment. Here tube 58 is separated from the joined tubes 59 and 62 to form aperture 55. Tubes 59 and 62 are drilled to form aperture 63 near the top surface 44, aperture 64 through the common wall 62, and aperture 65 near the inner surface 45. Apertures 63, 64, and 65 are of sufficient diameter to accommodate spoke 18 yet small enough to support the spoke nut 9.

Figure 4D is a cross sectional view of an alternate embodiment, at the location 4A-4A of Figure 4. This shows the spoke attachment near the smaller aperture 57. Here tubes 58 and 59 are joined and separated from tube 62 to form aperture 57. Tube 62 is drilled to form aperture 65 on the outer surface 67, and aperture 67 on the inner surface 45. Apertures 65 and 66 are oriented in a radial direction and large enough to accommodate the spoke 18' yet small enough to support nut 9.

Another example of a rim design with apertures is shown in Figure 4E. In this rim 16', apertures 55' are formed with axes perpendicular to the center plane of the rim 16', allowing cross winds to pass through the wheel. In this particular design, apertures 55' are shaped and positioned to allow a flexible tensile member 18" to attach the rim 16' to the hub 14'. The flexible tensile member 18" acts as a spoke and is under tension to fix the hub 14' in the center of rim 16'. A typical flexible tensile member 18" is preferably of a length to start at hub 14', weave through one aperture 55', continue along the rim 16' wall to the adjacent aperture 55', weave through that aperture 55' and return to the hub 14'.

The rim 16' is formed of two tubes with a cross-section, in the regions between apertures 55', similar to Figure 3C.

Figure 4F illustrates a cross section of rim 16' taken along the lines 4F-4F of Figure 4E. Tube 28' is separated from tube 29' to form aperture 55'. The flexible tensile member 18" is shown going through the aperture 55'. After exiting one aperture 55', the tensile member 18" extends along the side "S" of the rim 16', and then goes through the next aperture before returning to the hub 14'. As shown in Figure 4E, the tensile members 18" alternately bear against opposite sides of the rim.

Figure 4G illustrates a cross section of hub 14' taken along the lines 4G-4G of Figure 4E. The hub 14' has a flange 26' at a ninety degree angle to hub 14' which is used to support the ends of the flexible tensile members 18" and the tension adjusting nut 9'. This provides a simple means to attach the flexible tensile member 18" to the hub 14' and a means to adjust the tension in order to center the hub 14' relative to the rim 16'.

In Figure 4E, a tensile member 18" may extend between the hub and rim, with its opposite ends secured to the hub 14', for example in the manner shown in Figure 4G. Alternatively, a tensile member may extend to and from the hub more than once. In such a case, in between ends, the tensile member would wrap around a suitable bearing surface or surfaces on the hub.

The above mentioned detailed descriptions discuss rim type wheels which attach to the hub using small profile spoke designs. The other type of composite wheel is the one piece "monocoque" or one piece type wheel that incorporates the rim and the spokes together.

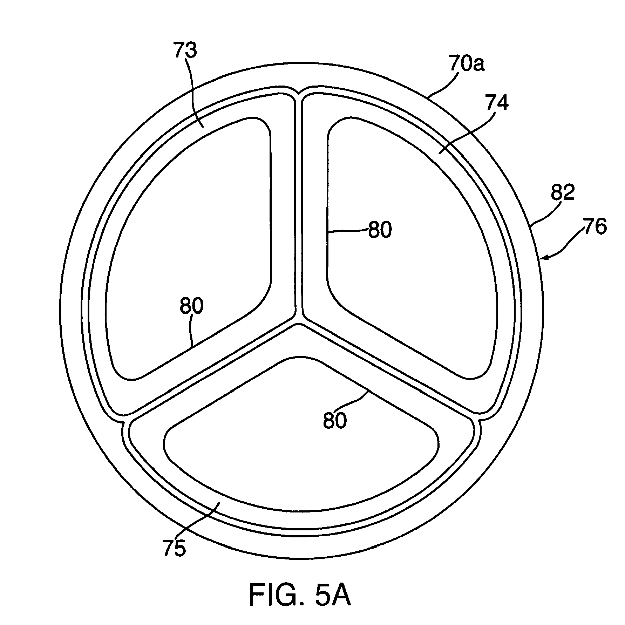

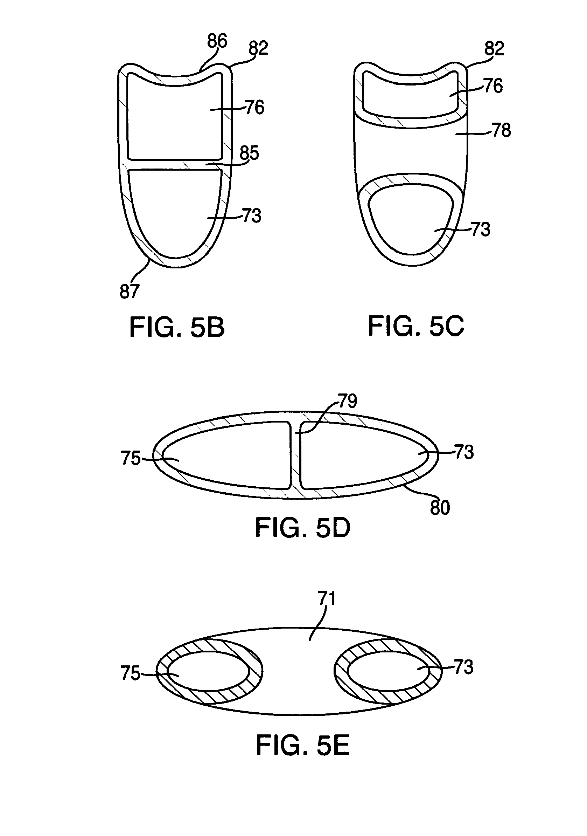

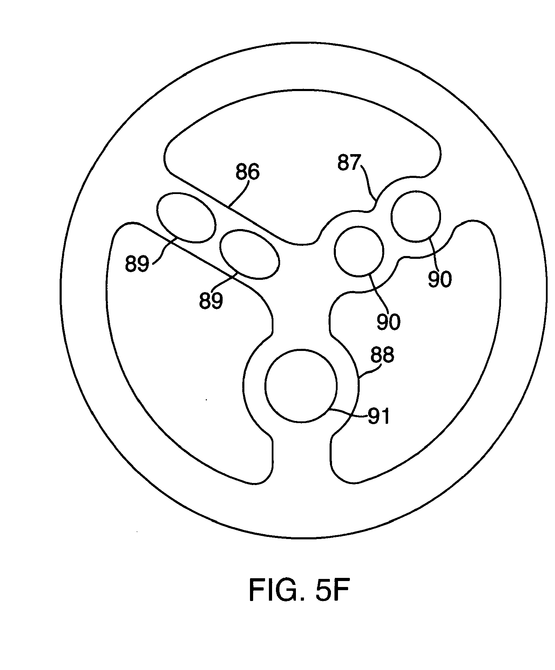

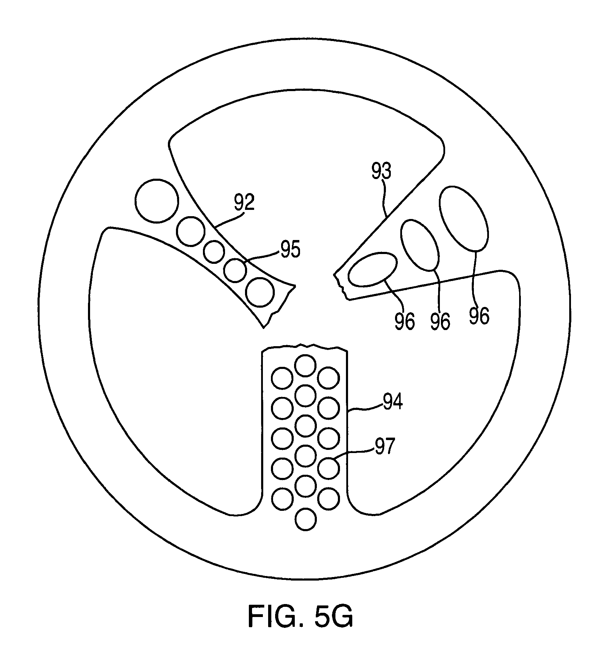

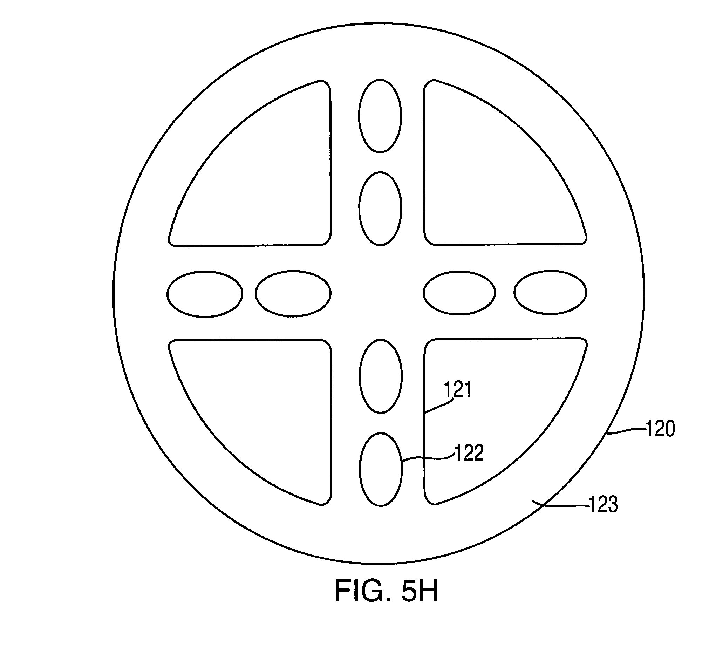

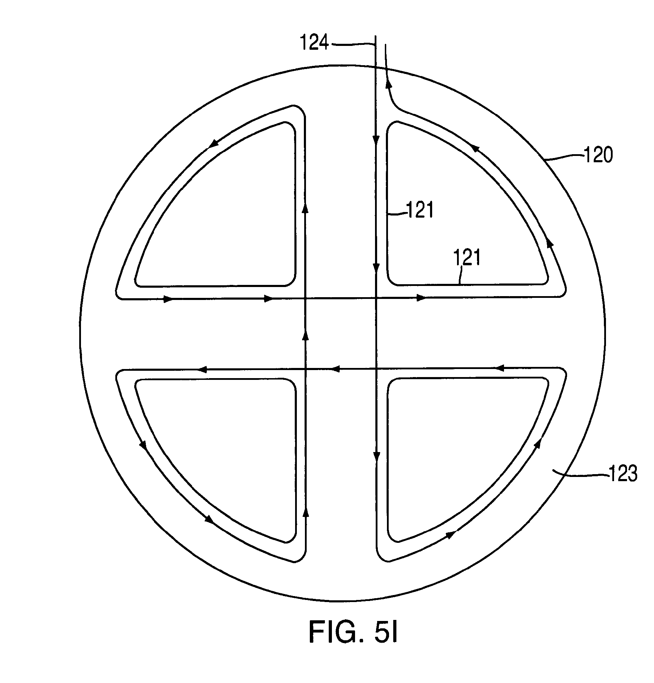

Figure 5 illustrates a composite wheel 70 with three spoke legs 80 molded to the outer rim 82. This wheel is constructed using 4 tubes and arranged so that each spoke leg 80 and the rim 82 has a double tube with an internal reinforcing wall 83 perpendicular to the center plane of the rim.

Figure 5A illustrates a lay-out of 4 tubes, prior to molding, which may be used to construct wheel 70. Tubes 73, 74 and 75 are used to construct the spokes 80 and the inner portion of rim 76. For example, tube 73 is positioned on the inner most surface of rim 76 and continues along the adjacent walls of spoke legs 80. A similar arrangement exists for tubes 74 and 75.

Tube 76 is positioned on the outer surface of rim 82 and is continuous around the entire circumference.

Figure 5B is a cross sectional view of rim 82 taken along the lines 5B-5B of Figure 5. Tube 76 is positioned near the outer surface 86 and tube 73 is positioned near the inner surface 87. A common wall 85 is formed in between.

Figure 5C is a cross sectional view of rim 82 taken along the lines 5C-5C in Figure 5. Here tube 76 is separated from tube 73 to form aperture 78.

Figure 5D is a cross sectional view of spoke leg 80 taken along the lines 5D-5D of Figure 5.

The cross section of the spoke leg 80 is aerodynamic in shape with tube 73 and tube 75 arranged side by side forming a common wall 79. This is an excellent arrangement for the tubes because the common wall 79 provides mid-span support for the thin walls of spoke leg 80.

Figure 5E is a cross sectional view of spoke leg 80 taken along the lines 5E-5E of Figure 5.

Here tube 73 is separated from tube 75 to form aperture 71. The size, shape and spacing of apertures 71 can be varied according to the desired design.

The composite wheel 70 described in Figure 5 can have more than 3 spokes if desired. Each spoke leg can vary in terms of width, thickness and cross sectional shape. Each aperture can vary in size, shape and number depending on the desired design and performance desired.

Figure 5F illustrates 3 other spoke leg designs which are possible with the invention. Spoke leg 86 is a straight leg of a wider width with two large oval shaped apertures 89. Spoke leg 87 is a contoured leg with an outside shape that follows the large circular apertures 90. Spoke leg 88 is a contoured spoke leg which follows the large singe aperture 91.

Figure 5G illustrates still some more options of wheel designs using the present invention.

Spoke leg 92 has a concave outer contour with a wider width near the hub and rim, with circular apertures 95 of varying diameters. Spoke leg 93 illustrates a tapered spoke leg with a wider width near the rim with ovoid shaped apertures 96 of varying sizes. Spoke leg 94 is constructed using three tubes with a staggered array of circular apertures 97 located in between the 3 tubes.

Another example of the versatility of the invention can be seen in Figure 5H. The composite wheel 120 is shown with four spoke legs 121, each having large oval apertures 122. A wheel having an even number of spoke legs facilitates the manufacture of the wheel using a single prepreg tube. Figure 5l illustrates a line 124 which shows how this prepreg tube would be positioned in the mold. Positioning the prepreg tube in this manner creates a double tube at each of the spoke legs 121, and a single tube for the outer rim 123.

Still another example of the versatility of the invention can be seen in Figure 5J. The composite wheel 70' is shown with multiple spoke legs 80', each having large oval openings, or "ports" 71', whose axes are oriented perpendicular to the center plane (or at any other desired angle). Each of the spoke legs 80' is of a smaller dimension. The spoke legs 80' can be any size and quantity, and the ports 71' in proportion thereof.

A further alternative spoke design can be seen in the bottom part of Figure 5J. Spoke leg 80" is of a very small cross sectional dimension and attaches to rim 70' and hub 14" in a non-rigid manner much like a traditional spoke. The spoke leg 80" has apertures 71" that are proportional to the dimension of spoke leg 80". The spoke leg may have any number of apertures of varying sizes, including no apertures as shown with spoke leg 80"'.

It is also possible to use an aluminum rim with carbon spoke legs. The spoke legs may be rigidly attached to produce a unitary wheel structure, or may be attached in a non-rigid manner much like traditional spoke legs.

All of the previously mentioned designs with molded spoke legs can have any number of apertures, including the option of zero apertures.

There are an unlimited amount of designs possible utilizing the multiple tube design. It is possible to significantly change the performance of the wheel in terms of rigidity and resiliency, as well as aerodynamics and aesthetics.

The preceding examples described apertures with axes oriented transverse to the plane of the wheel. It is also possible to orient the aperture axes to be approximately parallel to the plane of the wheel. Figure 6 illustrates a composite wheel 98 made in accordance to the principles of the invention with an outer rim 99 and molded spoke legs 100. The wheel can be constructed several different ways depending on the performance desired.

One alternative design is shown in Figure 6A, which is a cross sectional view taken along the lines 6A-6A of Figure 6. Here can be seen the spoke leg 100 with an outer surface 101 to accommodate the tire, and hub 102. The rim portion 99 is constructed using a single tube 103. The spoke leg 100 is constructed using tubes 104 and 105 which are separated to form apertures 106 and 107.

Another alternative design is shown in Figure 6B, which is an elevational view of wheel 130 with four spoke legs 131. Each spoke leg has a single large aperture 132. As with the example previously mentioned, a wheel having an even number of spoke legs facilitates the manufacture of the wheel using a single prepreg tube.

Figure 6C illustrates a line 134 which shows how this prepreg tube would be positioned in the mold. Starting at the twelve o'clock position of the wheel, a first portion "R" of the tube extends vertically downward, along the right-hand side of the upper vertical spoke 131, crosses the hub area, and continues vertically downward along the right-hand side of the lower vertical spoke until reaching the rim 133. After extending clockwise around one quarter of the rim circumference, i.e., from the six o'clock position to the three o'clock position, a second portion "LO" of the tube 131 extends along the lower sides of the two horizontal spokes until reaching the left-hand side of the rim.

Thereafter the tube extends clockwise around the rim from the nine o'clock to the six o'clock positions. A third portion "L" then extends vertically upward along the left-hand sides of the vertical spokes (crossing the hub area) until reaching the top of the rim. From there, the tube 134 extends clockwise around the rim from the twelve o'clock to nine o'clock positions, whence tube section "U" crosses the wheel along the upper sides of the two horizontal spokes.

Finally, the tube extends around the rim 133 clockwise from the three o'clock position to the starting location (12 o'clock).

Positioning the prepreg tube in this manner creates a double tube at each of the spoke legs 131, and a single tube for the outer rim 133. By positioning the tube portions "R" and "L" and "U" and "LO" as shown, when the wheel is molded it is possible to separate selected sections of the tube "R" from the tube "L," and separate selected sections of the tube "U" from the tube "LO," during molding to form apertures in the spokes.

Figure 6C describes one way to form a wheel using a single length of tube 134. It would be possible to vary the tube layout. For example, the tube can be positioned in a mirror image configuration. Also, if it is desired to form apertures in the center plane of the wheel, the tubes, e.g., "R" and "L," would be positioned one on top of the other. It is also possible, e.g., by positioning the tube sections "R" and "L" side-by-side and positioning the tube sections "U" and "LO" on top of one another, to form a wheel in which two spokes have apertures in the center plane, and two spokes have apertures perpendicular to the center plane.

Figure 6D is a cross sectional view similar to Figure 6A and showing an alternate embodiment. Here can be seen the spoke leg 131 with an outer surface 135 to accommodate the tire, and hub 102. The rim portion 133 is constructed using a single tube 136. The spoke leg 131 is constructed using tubes 137 and 138 which are separated to form aperture 132.

Figure 6E is a cross sectional view similar to Figure 6A showing another alternative design.

Here can be seen the spoke leg 131a having a contoured shape with tubes 137 and 138 following the curvature of aperture 132.

All of the previously mentioned designs with molded spoke legs with in-plane apertures can have any number of apertures, including the option of zero apertures.

As with the transverse aperture designs, designing wheels with apertures with axes approximately parallel to the plane of the wheel allows many possibilities utilizing the multiple tube design. It is possible to significantly change the performance of the wheel in terms of rigidity and resiliency, as well as aerodynamics and aesthetics.

As to the manner of usage and operation of the present invention, the same should be apparent from the above description. Accordingly, no further discussion relating to the manner of usage and operation will be provided.

With respect to the above description then, it is to be realized that the optimum dimensional relationships for the parts of the invention, to include variations in size, materials, shape, form, function and manner of operation, assembly and use, would be evident to one skilled in the art from the foregoing description, and all equivalents to the examples illustrated in the drawings and described in the specification are intended to be encompassed by the present invention.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

For clarity in the claims, apertures formed in the frame by separating portions of adjoining tubes from one another will be referred to as "ports." Ports which are used in connection with securing a spoke will be referred to as "spoke ports." Apertures formed by drilling will be referred to as "holes."

## Claims

1. A wheel (70,70',98,130) having a rim (10, 16, 16a, 82, 99, 133) lying in a center plane (P) and spokes (11, 18,18', 18", 80, 80', 80", 80"',86, 87, 88, 92, 93, 94,100, 121, 131,131a), at least a portion of said wheel comprising at least two hollow tubes (2,3, 19, 20, 28, 28', 29,29',39, 40, 41, 50, 58, 59, 62, 73, 74, 75, 76, 104, 105, 136, 137, 138) of composite material which are fused together along at least a common internal wall (4, 21, 30, 42, 43; 46, 51,83) **characterised in that** said tubes are separated from one another at specified locations to form one or more ports (5, 22, 46, 53,54, 55, 55', 57, 71,71',71", 78, 89, 90, 91, 95, 96, 97,106, 107, 122, 132).

2. A wheel, according to claim 1, **characterised in that** said rim is formed of at least two hollow tubes, wherein portions of said tubes are fused together along a common internal wall, and wherein other portions of said tubes form said outer and inner ends and sidewalls of said rim.

3. A wheel, according to claim 2, **characterised in that** said internal wall lies within said center plane.

4. A wheel to claim 3 **characterised in that** said tubes are separated from one another at specified locations to form spoke ports for receiving said spokes, wherein each said spoke ports has a portion forming a bearing surface for a spoke nut.

5. A wheel to claim 2 **characterised in that** said internal wall is oriented perpendicular to said center plane.

6. A wheel according to claim 5, **characterised in that** said internal wall and said inner end include spoke holes (38, 46) for receiving said spokes, wherein said internal wall forms a bearing surface for a spoke nut (36) and wherein said outer end includes access openings (35, 45) for inserting spoke nuts.

7. A wheel according to claim 3, **characterised in that** said rim comprises two hollow tubes, wherein portions of said tubes are fused together along a common internal wall, a third tube being located radially outside of said tubes and having portions fused to said tubes along another common internal wall, a portion of said third tube forming the outer end and part of the sidewalls of said rim.

8. A wheel according to claim 7, **characterised in that** said outer end includes access openings for inserting spoke nuts.

9. A wheel according to claim 7, **characterised in that** said third tube is spaced from said tubes at locations corresponding to said spoke ports to form ports oriented perpendicular to said center plane, and thereby provide external access to said spoke ports.

10. A wheel according to claim 3, **characterised in that** the spoke ports have an axis and at least two different diameters along said axis, and wherein the portion of said spoke ports having the larger diameter extend from said outer end.

11. A wheel according to claim 3, **characterised in that** said rim comprises two hollow tubes, wherein portions of said tubes are fused together along a common internal wall, a third tube and a fourth tube being disposed radially outward of said tubes, wherein portions of said third and fourth tubes are fused together along a further common internal wall lying within said center plane, wherein said third and fourth tubes are bonded to a further common internal wall perpendicular to said common plane.

12. A wheel, according to claim 11, **characterised in that** said third and fourth tubes are separated from one another at the locations of said spoke ports to provide external access to the spoke nuts.

13. A wheel, according to claim 11, **characterised in that** said third and fourth tubes are separated from said tubes at the locations of said spoke ports, to form ports oriented perpendicular to said center plane.

14. A wheel according to claim 5, **characterised in that** said internal wall is perpendicular to said center plane, said tubes being separated from one another at specified locations to form ports oriented perpendicular to said center plane.

15. A wheel according to claim 14, **characterised in that** at least one of said tubes comprises a plurality of spoke holes, said spoke holes being located at said ports so that said ports provide external access to said spoke holes.

16. A wheel according to one or more of the previous claims**, characterised in that** said ports are shaped as double, opposed arches.

17. A wheel, according to claim 1, **characterised in that** said rim is formed of a first tube and a second tube, wherein portions of said tubes are fused together along a common internal wall, said second tube lies radially outside of said first tube such that said internal wall is perpendicular to said center plane, said rim comprising a third tube lying radially outside of said second tube, said third tube being fused with said second tube along a common, internal wall.

18. A wheel, according to claim 17, **characterised in that** said first tube includes a plurality of spoke holes, said second tube being separated from said first tube at the locations of said spoke holes to form ports oriented perpendicular to said center plane and providing external access to said spoke holes.

19. A wheel, according to claim 1, **characterised in that** said spokes comprises at least a tensile member (18") connected to a hub (14') and to said rim, said tubes being separated from one another at specified locations to form ports oriented perpendicular to said center plane, said tensile member having ends secured to said hub and extending from said hub to said rim, through a first port to a second port, through said second port, and back to said hub.

20. A wheel, according to claim 1, **characterised in that** said rim is formed of at least one hollow tube, each of said spokes being formed of at least two hollow tubes fused together along a common, interior wall, said rim and spoke legs being bonded together to form a unitary wheel.

21. A wheel, according to claim 20, **characterised in that** said spokes have different cross-sectional shapes.

22. A wheel, according to claim 20**, characterised in that** said interior wall is oriented perpendicular to said center plane, the tubes of at least one spoke being separated from one another at specified locations to form ports oriented perpendicular to said center plane.

23. A wheel, according to claim 20, **characterised in that** said spoke extends in a radial direction and said interior walls lies in said center plane, portions of the tubes forming said spoke being separated from one another forming ports which are oriented perpendicular to said radial direction.

24. A wheel, according to claim 20, **characterised in that** said spoke comprises a portion formed by a single tube (136) that is bonded to the hollow tubes of said spoke.

25. A wheel, according to claim 20, **characterised in that** said rim comprises at least a portion with two hollow tubes and at least a portion formed of a single hollow tube.

26. A wheel, according to claim 20, **characterised in that** said rim comprises at least two hollow tubes fused together along a common, interior wall.

27. A wheel, according to claim 20, **characterised in that** the tubes of said rim are separated from one another at specified locations to form ports oriented perpendicular to said center plane.

28. A process for manufacturing a wheel, according to one or more of the previous claims, **characterised in that** it comprises the following steps:
- providing a tube of uncured composite material containing an internal inflatable bladder;
- providing a mold having a periphery for forming a rim, and an interior portion for forming four spokes extending from the rim;
- positioning a first length of said tube to extend across said mold for forming half of two spokes;
- positioning a second length of said tube to extend around a first quarter of said periphery;
- positioning a third length of said tube to extend across said mold in a direction perpendicular to said first length;
- positioning a fourth length of said tube to extend around a second quarter of said periphery;
- positioning a fifth length of said tube to extend across said mold, so as to be juxtaposed with said first length;
- positioning a sixth length of said tube to extend around a third quarter of said periphery;
- positioning a seventh length of said tube to extend across said mold, so as to be juxtaposed with said third length;
- positioning an eight length of said tube to extend around a fourth quarter of said periphery;
- positioning at least one mold member in order to form at least one port;
- closing said mold;
- pressurizing said bladder while heating said mold so as to consolidate and cure said composite material.

## Patentansprüche

1. Rad (70, 70', 98, 130) mit einem Kranz (10, 16, 16a, 82, 99, 133), der in einer Mittelebene (P) liegt, und mit Speichen (11, 18, 18', 18", 80, 80', 80", 80''', 86, 87, 88, 92, 93, 94, 100, 121, 131, 131a), wobei mindestens ein Abschnitt des Rades mindestens zwei hohle Rohre (2, 3, 19, 20, 28, 28', 29, 29', 39, 40, 41, 50, 58, 59, 62, 73, 74, 75, 76, 104, 105, 136, 137, 138) aus Verbundmaterial, die entlang mindestens einer gemeinsamen Innenwand (4, 21, 30, 42, 43, 46, 51, 83) miteinander verschweißt sind, aufweist, **dadurch gekennzeichnet, dass** die Rohre an bestimmten Stellen voneinander getrennt sind, um eine oder mehrere Öffnungen (5, 22, 46, 53, 54, 55, 55', 57, 71, 71', 71", 78, 89, 90, 91, 95, 96, 97, 106, 107, 122, 132) zu bilden.

2. Rad nach Anspruch 1, **dadurch gekennzeichnet, dass** der Kranz aus mindestens zwei hohlen Rohren gebildet ist, wobei Abschnitte der Rohre entlang einer gemeinsamen Innenwand miteinander verschweißt sind, und wobei andere Abschnitte der Rohre die äußeren und inneren Enden und Seitenwände des Kranzes bilden.

3. Rad nach Anspruch 2**, dadurch gekennzeichnet, dass** die Innenwand in der Mittelebene liegt.

4. Rad nach Anspruch 3, **dadurch gekennzeichnet, dass** die Rohre an bestimmten Stellen voneinander getrennt sind, um Speichenöffnungen zum Aufnahmen der Speichen zu bilden, wobei jede der Speichenöffnungen einen Abschnitt aufweist, der eine Auflagefläche für eine Speichenmutter bildet.

5. Rad nach Anspruch 2, **dadurch gekennzeichnet, dass** die Innenwand senkrecht zur Mittelebene ausgerichtet ist.

6. Rad nach Anspruch 5, **dadurch gekennzeichnet, dass** die Innenwand und das innere Ende Speichenlöcher (38, 46) zur Aufnahme der Speichen aufweisen, wobei die Innenwand eine Auflagefläche für eine Speichenmutter (36) bildet, und wobei das äußere Ende Zugangsöffnungen (35, 45) zum Einführen von Speichenmuttern aufweist.

7. Rad nach Anspruch 3, **dadurch gekennzeichnet, dass** der Kranz zwei hohle Rohre aufweist, wobei Abschnitte der Rohre entlang einer gemeinsamen Innenwand miteinander verschweißt sind, wobei ein drittes Rohr radial außerhalb der Rohre angeordnet ist und Abschnitte aufweist, die entlang einer anderen gemeinsamen Innenwand mit den Rohren verschweißt sind, wobei ein Abschnitt des dritten Rohres das äußere Ende und einen Teil der Seitenwand des Kranzes bildet.

8. Rad nach Anspruch 7, **dadurch gekennzeichnet, dass** das äußere Ende Zugangsöffnungen zum Einführen von Speichenmuttern aufweist.

9. Rad nach Anspruch 7, **dadurch gekennzeichnet, dass** das dritte Rohr an Stellen, die den Speichenöffnungen entsprechen, von den Rohren beabstandet ist, um Öffnungen zu bilden, die senkrecht zur Mittelebene ausgerichtet sind, und um **dadurch** einen Zugang zu den Speichenöffnungen von außen her zu ermöglichen.

10. Rad nach Anspruch 3, **dadurch gekennzeichnet, dass** die Speichenöffnungen eine Achse und entlang dieser Achse mindestens zwei unterschiedliche Durchmesser aufweisen, und wobei der Abschnitt der Speichenöffnungen mit dem größeren Durchmesser vom äußeren Ende ausgeht.

11. Rad nach Anspruch 3, **dadurch gekennzeichnet, dass** der Kranz zwei hohle Rohre aufweist, wobei Abschnitte der Rohre entlang einer gemeinsamen Innenwand miteinander verschweißt sind, wobei ein drittes Rohr und ein viertes Rohr radial außerhalb dieser Rohre angeordnet sind, wobei Abschnitte der dritten und vierten Rohre entlang einer weiteren gemeinsamen Innenwand, die in der Mittelebene liegt, miteinander verschweißt sind, wobei die dritten und vierten Rohre mit einer weiteren gemeinsamen Innenwand senkrecht zur gemeinsamen Ebene verbunden sind.

12. Rad nach Anspruch 11, **dadurch gekennzeichnet, dass** die dritten und vierte Rohre an den Stellen der Speichenöffnungen voneinander getrennt sind, um einen Zugang zu den Speichenmuttern von außen her zu ermöglichen.

13. Rad nach Anspruch 11, **dadurch gekennzeichnet, dass** die dritten und vierten Rohre an den Stellen der Speichenöffnungen von den Rohren getrennt sind, um Öffnungen zu bilden, die senkrecht zur Mittelebene ausgerichtet sind.

14. Rad nach Anspruch 5, **dadurch gekennzeichnet, dass** die Innenwand senkrecht zur Mittelebene ist, wobei die Rohre an bestimmten Stellen voneinander getrennt sind, um Öffnungen zu bilden, die senkrecht zur Mittelebene ausgerichtet sind.

15. Rad nach Anspruch 14, **dadurch gekennzeichnet, dass** mindestens eines der Rohre eine Vielzahl von Speichenlöchern aufweist, wobei die Speichenlöcher sich an den Öffnungen befinden, so dass die Öffnungen einen Zugang zu den Speichenlöchern von außen her ermöglichen.

16. Rad nach einem oder mehreren der vorstehenden Ansprüche, **dadurch gekennzeichnet, dass** die Öffnungen wie doppelte, einander gegenüber liegende Bögen geformt sind.

17. Rad nach Anspruch 1, **dadurch gekennzeichnet, dass** der Kranz aus einem ersten Rohr und einem zweiten Rohr gebildet ist, wobei Abschnitte der Rohre entlang einer gemeinsamen Innenwand miteinander verschweißt sind, wobei das zweite Rohr radial außerhalb des ersten Rohres liegt, so dass die Innenwand senkrecht zur Mittelebene ist, wobei der Kranz ein drittes Rohr aufweist, das radial außerhalb des zweiten Rohres liegt, wobei das dritte Rohr entlang einer gemeinsamen Innenwand mit dem zweiten Rohr verschweißt ist.

18. Rad nach Anspruch 17, **dadurch gekennzeichnet, dass** das erste Rohr eine Vielzahl von Speichenlöchern aufweist, wobei das zweite Rohr an den Stellen der Speichenlöcher vom ersten Rohr getrennt ist, um Öffnungen zu bilden, die senkrecht zur Mittelebene ausgerichtet sind und die einen Zugang zu den Speichenlöchern von außen her ermöglichen.

19. Rad nach Anspruch 1, **dadurch gekennzeichnet, dass** die Speichen mindestens ein Spannelement (18") aufweisen, das mit einer Nabe (14') und mit dem Kranz verbunden ist, wobei die Rohre an bestimmten Stellen voneinander getrennt sind, um Öffnungen zu bilden, die senkrecht zur Mittelebene ausgerichtet sind, wobei das Spannelement an der Nabe befestigte Enden aufweist und von der Nabe zum Kranz, durch eine erste Öffnung zu einer zweiten Öffnung, durch die zweite Öffnung und zurück zur Nabe reichen.

20. Rad nach Anspruch 1, **dadurch gekennzeichnet, dass** der Kranz aus mindestens einem hohlen Rohr gebildet ist, wobei jede der Speichen aus mindestens zwei hohlen Rohren gebildet ist, die entlang einer gemeinsamen Innenwand miteinander verschweißt sind, wobei der Kranz und die Speichenschenkel miteinander verbunden sind, um ein aus einer Einheit bestehendes Rad zu bilden.

21. Rad nach Anspruch 20, **dadurch gekennzeichnet, dass** die Speichen unterschiedliche Querschnittsformen aufweisen.

22. Rad nach Anspruch 20, **dadurch gekennzeichnet, dass** die Innenwand senkrecht zur Mittelebene ausgerichtet ist, wobei die Rohre mindestens einer Speiche an bestimmten Stellen voneinander getrennt sind, um Öffnungen zu bilden, die senkrecht zur Mittelebene ausgerichtet sind.

23. Rad nach Anspruch 20, **dadurch gekennzeichnet, dass** die Speiche in radialer Richtung verläuft und dass die Innenwand in der Mittelebene liegt, wobei Abschnitte der Rohre, welche die Speiche bilden, voneinander getrennt sind und dabei Öffnungen bilden, die senkrecht zur radialen Richtung ausgerichtet sind.

24. Rad nach Anspruch 20, **dadurch gekennzeichnet, dass** die Speiche einen Abschnitt aufweist, der von einem einzelnen Rohr (136) gebildet wird, das mit den hohlen Rohren der Speiche verbunden ist.

25. Rad nach Anspruch 20, **dadurch gekennzeichnet, dass** der Kranz mindestens einen Abschnitt mit zwei hohlen Rohren und mindestens einen Abschnitt, der aus einen einzelnen hohlen Rohr gebildet ist, aufweist.

26. Rad nach Anspruch 20, **dadurch gekennzeichnet, dass** der Kranz mindestens zwei hohle Rohre aufweist, die entlang einer gemeinsamen Innenwand miteinander verschweißt sind.

27. Rad nach Anspruch 20, **dadurch gekennzeichnet, dass** die Rohre des Kranzes an bestimmten Stellen voneinander getrennt sind, um Öffnungen zu bilden, die senkrecht zur Mittelebene ausgerichtet sind.

28. Verfahren zum Herstellung eines Rades nach einem oder mehreren der vorstehenden Ansprüche, **dadurch gekennzeichnet, dass** es die folgenden Schritte umfasst:
- Bereitstellen eines Rohres aus ungehärtetem Verbundstoff, das eine innere, aufweitbare Blase enthält;
- Bereitstellen einer Form mit einem Umfangsrand zur Ausbildung eines Kranzes und einem Innenabschnitt zur Ausbildung von vier Speichen, die von dem Kranz ausgehen;
- Positionieren eines ersten Rohrabschnitts solchermaßen, dass dieser quer über die Form verläuft, um die Hälfte von zwei Speichen zu bilden;
- Positionieren eines zweiten Rohrabschnitts solchermaßen, dass dieser um ein erstes Viertel des Umfangs verläuft;
- Positionieren eines dritten Rohrabschnitts solchermaßen, dass dieser quer über der Form, senkrecht zum ersten Abschnitt verläuft;
- Positionieren eines vierten Rohrabschnitts solchermaßen, dass dieser um ein zweites Viertel des Umfangs verläuft;
- Positionieren eines fünften Rohrabschnitts solchermaßen, dass dieser quer über die Form verläuft, so dass er neben dem ersten Abschnitt liegt;
- Positionieren eines sechsten Stückes des Rohres solchermaßen, dass es um ein drittes Viertel des Umfangs verläuft;
- Positionieren eines siebten Rohrabschnitts solchermaßen, dass dieser neben dem dritten Abschnitt liegt;
- Positionieren eines achten Rohrabschnitts solchermaßen, dass dieser um ein viertes Viertel des Umfangs verläuft;
- Positionieren mindestens eines Formelements, um mindestens eine Öffnung zu bilden;
- Schließen der Form;
- Erhöhen des Druckes in der Blase bei gleichzeitigem Erwärmen der Form, um den Verbundstoff zu verfestigen und zu härten.

## Revendications

1. Roue (70, 70', 98, 130) ayant une jante (10, 16, 16a, 82, 99, 133) reposant dans un plan central (P) et des rayons (11, 18, 18', 18", 80, 80', 80 ", 80"', 86, 87, 88, 92, 93, 94, 100, 121, 131, 131a), au moins une partie de ladite roue comprenant au moins deux tubes creux (2, 3, 19, 20, 28, 28', 29, 29', 39, 40, 41, 50, 58, 59, 62, 73, 74, 75, 76, 104, 105, 136, 137, 138) de matériau composite qui sont fusionnés ensemble le long d'au moins une paroi intérieure commune (4, 21, 30, 42, 43, 46, 51, 83) **caractérisée en ce que** lesdits tubes sont séparés l'un de l'autre à des emplacements spécifiques pour former un ou plusieurs orifices (5, 22, 46, 53, 54, 55, 55', 57, 71, 71', 71 ", 78, 89, 90, 91, 95, 96, 97, 106, 107, 122, 132).

2. Roue, selon la revendication 1, **caractérisée en ce que** ladite jante est formée d'au moins deux tubes creux, où les parties desdits tubes sont fusionnées ensemble le long d'une paroi intérieure commune, et où d'autres parties desdits tubes forment lesdites extrémités extérieure et intérieure et les parois latérales de ladite jante.

3. Roue, selon la revendication 2, **caractérisée en ce que** ladite paroi intérieure se trouve dans ledit plan central.

4. Roue selon la revendication 3 **caractérisée en ce que** lesdits tubes sont séparés l'un de l'autre à des emplacements spécifiques pour former des orifices de rayon pour recevoir lesdits rayons, où chacun desdits orifices de rayon possède une partie formant une surface d'appui pour un écrou de rayon.

5. Roue selon la revendication 2 **caractérisée en ce que** ladite paroi intérieure est orientée perpendiculairement audit plan central.

6. Roue selon la revendication 5, **caractérisée en ce que** ladite paroi intérieure et ladite extrémité intérieure comprennent des trous de rayon (38, 46) pour recevoir lesdits rayons, où ladite paroi intérieure forme une surface d'appui pour un écrou de rayon (36) et où ladite extrémité extérieure comprend des ouvertures d'accès (35, 45) pour insérer des écrous de rayon.

7. Roue selon la revendication 3, **caractérisée en ce que** ladite jante comprend deux tubes creux, où les parties desdits tubes sont fusionnées ensemble le long d'une paroi intérieure commune, un troisième tube étant situé radialement à l'extérieur desdits tubes et ayant des parties fusionnées auxdits tubes le long d'une autre paroi intérieure commune, une partie dudit troisième tube formant l'extrémité extérieure et une partie des parois latérales de ladite jante.

8. Roue selon la revendication 7, **caractérisée en ce que** ladite extrémité extérieure comprend des ouvertures d'accès pour insérer des écrous de rayon.

9. Roue selon la revendication 7, **caractérisée en ce que** ledit troisième tube est espacé desdits tubes à des emplacements correspondant auxdits orifices de rayon pour former des orifices orientés perpendiculairement audit plan central, et fournir ainsi un accès extérieur auxdits orifices de rayon.

10. Roue selon la revendication 3, **caractérisée en ce que** les orifices de rayon ont un axe et au moins deux diamètres différents le long dudit axe, et où la partie desdits orifices de rayon ayant le diamètre le plus important s'étend à partir de ladite extrémité extérieure.

11. Roue selon la revendication 3, **caractérisée en ce que** ladite jante comprend deux tubes creux, où les parties desdits tubes sont fusionnées ensemble le long d'une paroi interne commune, un troisième tube et un quatrième tube étant disposés radialement vers l'extérieur desdits tubes, où les parties desdits troisième et quatrième tubes sont fusionnés ensemble le long d'une paroi intérieure commune supplémentaire disposée dans ledit plan central, où lesdits troisième et quatrième tubes sont liés à une paroi intérieure commune supplémentaire perpendiculaire audit plan commun.

12. Roue, selon la revendication 11, **caractérisée en ce que** lesdits troisième et quatrième tubes sont séparés l'un de l'autre aux emplacements desdits orifices de rayon pour fournir un accès extérieur aux écrous de rayon.

13. Roue, selon la revendication 11, **caractérisée en ce que** lesdits troisième et quatrième tubes sont séparés desdits tubes aux emplacements desdits orifices de rayon, pour former des orifices orientés perpendiculairement audit plan central.

14. Roue, selon la revendication 5, **caractérisée en ce que** ladite paroi intérieure est perpendiculaire audit plan central, lesdits tubes étant séparés l'un de l'autre à des emplacements spécifiques pour former des orifices orientés perpendiculairement audit plan central.

15. Roue, selon la revendication 14, **caractérisée en ce qu'**au moins un desdits tubes comprend une pluralité de trous de rayon, lesdits trous de rayon étant situés auxdits orifices de sorte que lesdits orifices fournissent un accès extérieur auxdits trous de rayon.

16. Roue selon l'une ou plusieurs des revendications précédentes, **caractérisée en ce que** lesdits orifices sont sous la forme d'arcs doubles opposés.

17. Roue, selon la revendication 1, **caractérisée en ce que** ladite jante est formée d'un premier tube et d'un deuxième tube, où les parties desdits tubes sont fusionnées ensemble le long d'une paroi intérieure commune, ledit deuxième tube est disposé radialement à l'extérieur dudit premier tube de sorte que ladite paroi intérieure est perpendiculaire audit plan central, ladite jante comprenant un troisième tube disposé radialement à l'extérieur dudit deuxième tube, ledit troisième tube étant fusionné avec ledit deuxième tube le long d'une paroi interne commune.

18. Roue, selon la revendication 17, **caractérisée en ce que** ledit premier tube comprend une pluralité de trous de rayon, ledit deuxième tube étant séparé dudit premier tube aux emplacements desdits trous de rayon pour former des orifices orientés perpendiculairement audit plan central et fournissant un accès extérieur auxdits trous de rayon.

19. Roue, selon la revendication 1, **caractérisée en ce que** lesdits rayons comprennent au moins un élément résistant (18") relié à un moyeu (14') et à ladite jante, lesdits tubes étant séparés l'un de l'autre à des emplacements spécifiques pour former des orifices orientés perpendiculairement audit plan central, ledit élément résistant ayant des extrémités fixées audit moyeu et s'étendant dudit moyeu à ladite jante, à travers un premier orifice vers un deuxième orifice, à travers ledit deuxième orifice, et de retour vers ledit moyeu.

20. Roue, selon la revendication 1, **caractérisée en ce que** ladite jante est formée d'au moins un tube creux, chacun desdits rayons étant formé d'au moins deux tubes creux fusionnés ensemble le long d'une paroi intérieure commune, ladite jante et lesdites pattes de rayon étant liées ensemble pour former une roue unitaire.

21. Roue, selon la revendication 20, **caractérisée en ce que** lesdits rayons ont des formes de section différentes.

22. Roue, selon la revendication 20, **caractérisée en ce que** ladite paroi intérieure est orientée perpendiculairement audit plan central, les tubes d'au moins un rayon étant séparés l'un de l'autre à des emplacements spécifiques pour former des orifices orientés perpendiculairement audit plan central.

23. Roue, selon la revendication 20, **caractérisée en ce que** ledit rayon s'étend dans une direction radiale et lesdites parois intérieures sont disposées dans ledit plan central, les parties des tubes formant ledit rayon étant séparées l'un de l'autre formant des orifices qui sont orientés perpendiculairement à ladite direction radiale.

24. Roue, selon la revendication 20, **caractérisée en ce que** ledit rayon comprend une partie formée par un seul tube (136) qui est relié aux tubes creux dudit rayon.

25. Roue, selon la revendication 20, **caractérisée en ce que** ladite jante comprend au moins une partie avec deux tubes creux et au moins une partie formée d'un seul tube creux.

26. Roue, selon la revendication 20, **caractérisée en ce que** ladite jante comprend au moins deux tubes creux fusionnés ensemble le long d'une paroi intérieure commune.

27. Roue, selon la revendication 20, **caractérisée en ce que** les tubes de ladite jante sont séparés l'un de l'autre à des emplacements spécifiques pour former des orifices orientés perpendiculairement audit plan central.

28. Procédé de fabrication d'une roue, selon l'une ou plusieurs des revendications précédentes, **caractérisé en ce qu'**il comprend les étapes suivantes :
- fournir un tube de matériau composite non cuit comprenant une vessie gonflable intérieure ;
- fournir un moule ayant une périphérie pour former une jante, et une partie intérieure pour former quatre rayons s'étendant à partir de la jante ;
- positionner une première longueur dudit tube pour s'étendre à travers ledit moule pour former la moitié de deux rayons ;
- positionner une deuxième longueur dudit tube pour s'étendre autour d'un premier quart de ladite périphérie ;
- positionner une troisième longueur dudit tube pour s'étendre à travers ledit moule dans une direction perpendiculaire à ladite première longueur ;
- positionner une quatrième longueur dudit tube pour s'étendre autour d'un deuxième quart de ladite périphérie ;
- positionner une cinquième longueur dudit tube pour s'étendre à travers ledit moule, afin d'être juxtaposée à ladite première longueur ;
- positionner une sixième longueur dudit tube pour s'étendre autour d'un troisième quart de ladite périphérie ;
- positionner une septième longueur dudit tube pour s'étendre à travers ledit moule, afin d'être juxtaposée à ladite troisième longueur ;
- positionner une huitième longueur dudit tube pour s'étendre autour d'un quatrième quart de ladite périphérie ;
- positionner au moins un élément de moule afin de former au moins un orifice ;
- fermer ledit moule ;
- mettre sous pression ladite vessie tout en chauffant ledit moule afin de consolider et cuire ledit matériau composite.
